(19) **Europäisches Patentamt**
**European Patent Office**
**Office européen des brevets**

(11) **EP 4 174 712 A1**

(12) **EUROPEAN PATENT APPLICATION**
published in accordance with Art. 153(4) EPC

(43) Date of publication:
**03.05.2023 Bulletin 2023/18**

(21) Application number: **21918110.4**

(22) Date of filing: **17.11.2021**

(51) International Patent Classification (IPC):
**G06F 30/27** (2020.01)          **G06F 16/29** (2019.01)
**G06F 16/587** (2019.01)        **G06F 16/9537** (2019.01)
**G06F 16/909** (2019.01)

(86) International application number:
**PCT/CN2021/131177**

(87) International publication number:
**WO 2022/247165 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.05.2021   CN 202110565434**

(71) Applicant: **Beijing Baidu Netcom Science Technology Co., Ltd.**
**Beijing 100085 (CN)**

(72) Inventors:
• **FAN, Miao**
  **Beijing 100085 (CN)**
• **HUANG, Jizhou**
  **Beijing 100085 (CN)**
• **WANG, Haifeng**
  **Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **CODING METHOD AND APPARATUS FOR GEOGRAPHIC LOCATION AREA, AND METHOD AND APPARATUS FOR ESTABLISHING CODING MODEL**

(57)     A method and apparatus for encoding a geographic location region as well as a method and apparatus for establishing an encoding model, which relate to big data and deep learning technologies in the field of artificial intelligence technologies are disclosed. An implementation includes: determining a to-be-encoded geographic location region; acquiring at least one kind of geographic function information and at least one kind of surface-feature distribution information of the geographic location region; and inputting the acquired geographic function information and the acquired surface-feature distribution information into an encoding model, the encoding model performing embedding on the geographic function information and the surface-feature distribution information, and fusing vector representations obtained by the embedding to obtain an encoding result of the geographic location region. In the present disclosure, the geographic location region is encoded reasonably, such that the geographic location regions with similar geographic functions and surface-feature distributions have more similar encoding results.

Fig. 1

**Description**

The present application claims priority to Chinese Patent Application No. 202110565434.6, filed on May 24, 2021, entitled "Method and Apparatus for Encoding Geographic Location Region As Well As Method and Apparatus for Establishing Encoding Model".

**TECHNICAL FIELD**

The present disclosure relates to the field of computer application technologies, and particularly to big data and deep learning technologies in artificial intelligence technologies.

**BACKGROUND**

With rapid development of a mobile Internet technology, applications of mobile Internet affect our lives in various aspects. Different from the personal computer (PC) era, information of a brand new dimension, i.e., a geographic location, is added in almost all mobile applications.
In order to facilitate recording and application of the geographic location, different geographic location regions are required to be encoded reasonably.

**SUMMARY**

In view of this, the present disclosure provides a method and apparatus for encoding a geographic location region, a device and a computer storage medium, so as to reasonably encode the geographic location region.
According to a first aspect of the present disclosure, there is provided a method for establishing an encoding model, including:

acquiring training data, the training data including at least one triplet, and the triplet including an anchor sample, a positive sample and a negative sample of geographic location regions; and
training the encoding model using the training data, the encoding model performing the following operations on each sample: performing embedding on at least one kind of geographic function information and at least one kind of surface-feature distribution information of the sample, and fusing vector representations obtained by the embedding to obtain an encoding result of the sample;
where the encoding model has training targets of minimizing a distance between the encoding result of the anchor sample and the encoding result of the positive sample in the triplet, and maximizing a distance between the encoding result of the anchor sample and the encoding result of the negative sample in the triplet.

According to a second aspect of the present disclosure, there is provided a method for encoding a geographic location region, including:

determining a to-be-encoded geographic location region;
acquiring at least one kind of geographic function information and at least one kind of surface-feature distribution information of the geographic location region; and
inputting the acquired geographic function information and the acquired surface-feature distribution information into an encoding model, the encoding model performing embedding on the geographic function information and the surface-feature distribution information, and fusing vector representations obtained by the embedding to obtain an encoding result of the geographic location region.

According to a third aspect of the present disclosure, there is provided an apparatus for establishing an encoding model, including:

an acquiring unit configured to acquire training data, the training data including at least one triplet, and the triplet including an anchor sample, a positive sample and a negative sample of geographic location regions; and
a training unit configured to train the encoding model using the training data, the encoding model performing the following operations on each sample: performing embedding on at least one kind of geographic function information and at least one kind of surface-feature distribution information of the sample, and fusing vector representations obtained by the embedding to obtain an encoding result of the sample;
wherein the encoding model has training targets of minimizing a distance between the encoding result of the anchor sample and the encoding result of the positive sample in the triplet, and maximizing a distance between the encoding result of the anchor sample and the encoding result of the negative sample in the triplet.

According to a fourth aspect of the present disclosure, there is provided an apparatus for encoding a geographic location region, including:

a determining unit configured to determine a to-be-encoded geographic location region;
an acquiring unit configured to acquire at least one kind of geographic function information and at least one kind of surface-feature distribution information of the geographic location region; and
an encoding unit configured to input the acquired geographic function information and the acquired surface-feature distribution information into an encoding model, the encoding model performing embedding on the geographic function information and the surface-feature distribution information, and fusing vector representations obtained by the embedding to obtain an encoding result of the geographic location region.

According to a fifth aspect of the present disclosure, there is provided an electronic device, including:

at least one processor; and
a memory connected with the at least one processor communicatively;
wherein the memory stores instructions executable by the at least one processor to enable the at least one processor to perform the method as mentioned above.

According to a sixth aspect of the present disclosure, there is provided a non-transitory computer readable storage medium with computer instructions stored thereon, wherein the computer instructions are used for causing a computer to perform the method as mentioned above.

According to a seventh aspect of the present disclosure, there is provided a computer program product including a computer program which, when executed by a processor, implements the method as mentioned above.

From the above technical solution, the encoding model in the present disclosure performs encoding based on the geographic function information and the surface-feature distribution information of the geographic location region, such that the geographic location regions with similar geographic functions and surface-feature distributions have more similar encoding results, and the encoding method is more reasonable compared with a traditional encoding method.

It should be understood that the statements in this section are not intended to identify key or critical features of the embodiments of the present disclosure, nor limit the scope of the present disclosure. Other features of the present disclosure will become apparent from the following description.

## BRIEF DESCRIPTION OF THE DRAWINGS

The drawings are used for better understanding the present solution and do not constitute a limitation of the present disclosure. In the drawings,

Fig. 1 is a flow chart of a method for establishing an encoding model according to an embodiment of the present disclosure;
Fig. 2 is a schematic structural diagram of an encoding model according to an embodiment of the present disclosure;
Fig. 3 is a flow chart of a method for encoding a geographic location region according to an embodiment of the present disclosure;
Fig. 4 is an instance diagram of applications of geographic location region encoding results according to an embodiment of the present disclosure;
Fig. 5 is a structural diagram of an apparatus for establishing an encoding model according to an embodiment of the present disclosure;
Fig. 6 is a structural diagram of an apparatus for encoding a geographic location region according to an embodiment of the present disclosure; and
Fig. 7 is a block diagram of an electronic device configured to implement embodiments of the present disclosure.

## DETAILED DESCRIPTION OF EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

Encoding of a geographic location region is representation of the geographic location region using one code, and is used to distinguish the geographic location region from other geographic location regions in a limited geographic location region set.

The geographic location region may be divided according to administrative divisions, such as a city, a district, a block, or the like. The geographic location region may also be divided according to a preset accuracy and shape, for example, into a 1km × 1km grid, and each grid is used as one geographic location region.

At present, all conventional geographic-region encoding methods comply with the principle that "geographic location regions close in physical space have more similar codes"; that is, conventionally, the geographic location region is encoded based on location information, such as commonly-used GeoHash encoding. However, in practical applications, these encoding methods are unreasonable. The present disclosure has a core idea that encoding is based on the principle that "geographic location regions with similar geographic functions and surface-feature distributions have more similar codes". The method according to the present disclosure will be described below in detail in conjunction with an embodiment.

In the present disclosure, encoding of the geographic location region is mainly implemented based on an encoding model, and thus mainly includes two stages: a stage of establishing an encoding model and a stage of encoding the geographic location region using the encoding model. The two stages are described below.

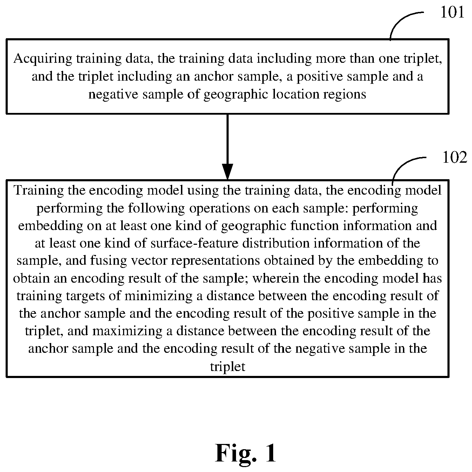

Fig. 1 is a flow chart of a method for establishing an encoding model according to an embodiment of the present disclosure, an execution subject of the method may be an apparatus for establishing an encoding model, and the apparatus may be configured as an application located at a server, or a functional unit, such as a plug-in or software development kit (SDK) located in the application of the server, or the like, or be located at a computer terminal with high computing power, which is not particularly limited in the embodiment of the present invention. As shown in Fig. 1, the method may include the following steps:

101: acquiring training data, the training data including at least one triplet, and the triplet including an anchor sample, a positive sample and a negative sample of geographic location regions.

102: training the encoding model using the training data, the encoding model performing the following operations on each sample: performing embedding on at least one kind of geographic function information and at least one kind of surface-feature distribution information of the sample, and fusing vector representations obtained by the embedding to obtain an encoding result of the sample; wherein the encoding model has training targets of minimizing a distance between the encoding result of the anchor sample and the encoding result of the positive sample in the triplet, and maximizing a distance between the encoding result of the anchor sample and the encoding result of the negative sample in the triplet.

From the above technical solution in the embodiment, the established encoding model performs encoding based on the geographic function information and the surface-feature distribution information of the geographic location region, such that the geographic location regions with similar geographic functions and surface-feature distributions have more similar encoding results. The above steps will be described below in detail in conjunction with an embodiment.

First, the above step 101 of acquiring training data is described in detail in conjunction with the embodiment.

The training data used in the present disclosure is triplets, and each triplet includes an anchor sample, a positive sample and a negative sample. Each sample is a geographic location region. The positive sample is a geographic location region having a geographic function and a surface-feature distribution quite similar to those of the anchor sample. The negative sample is a geographic location region having a geographic function and a surface-feature distribution dissimilar to those of the anchor sample.

Each triplet in the training data may be selected manually. The method has high accuracy, but consumes a high human cost, and has a low efficiency. Therefore, several methods of automatically acquiring the training data are provided in the embodiment of the present disclosure, such as but not limited to:

a first method: acquiring the anchor sample of a geographic location region, selecting a neighbor geographic location region of the anchor sample as the positive sample, and selecting a non-neighbor geographic location region of the anchor sample as the negative sample.

In the method, the anchor sample may be selected from the geographic location regions divided in advance. During the selection of the positive sample of the anchor sample, since two adjacent geographic location regions are more likely to have similar geographic functions and surface-feature distributions, one geographic location region may be selected from the neighbor geographic location regions of the anchor sample as the positive sample. A selection method may be a random selection method or a method of selection according to a certain rule. During the selection of the negative sample of the anchor sample, one geographic location region may be selected from the non-neighbor geographic location regions as the negative sample. A selection method may also be a random selection method or a method of selection according to a certain rule.

A second method: from a navigation log, acquiring a geographic location region where a navigation starting point is located and a geographic location region where a navigation ending point is located as the anchor sample and the positive sample of the geographic location regions respectively, and selecting another geographic location region as the negative sample.

Based on customary preferences of users, a departure place and a destination are likely to have similar geographic functions and surface-feature distributions. Therefore, navigation information of a large number of users may be acquired from the navigation log, geographic location region pairs formed by the navigation starting points and the navigation ending points are counted, and the geographic location region pair with an occurrence frequency or an occurrence number meeting a certain condition is used as the anchor sample and the positive sample. The negative sample of the anchor sample may be randomly selected from other geographic location regions than the positive example and the anchor sample.

A third method: from a retrieval log, acquiring a geographic location region where an initiating location of retrieval is located and a geographic location region where a target location of the retrieval is located as the anchor sample and the positive sample of the geographic location regions respectively, and randomly selecting another geographic location region as the negative sample.

Similarly, based on customary preferences of users, a location where a user initiates retrieval and a target location of the retrieval are likely to have similar geographic functions and surface-feature distributions. Therefore, retrieval information of a large number of users may be acquired from the retrieval log. Geographic location region pairs formed by the initiating locations and the target locations of the retrieval are counted, and the geographic location region pair with an occurrence frequency or an occurrence number meeting a certain condition is used as the anchor sample and the positive sample. The negative sample of the anchor sample may be randomly selected from other geographic location regions than the positive example and the anchor sample.

The above step 102 of "training the encoding model using the training data" is described in detail below in conjunction with an embodiment.

At least one kind of geographic function information and at least one kind of surface-feature distribution information are extracted from the sample in each triplet in the training data.

The geographic function information may include at least one of: point of interest (POI) information, user information, or place query terms initiated at the geographic location region.

The POI information may include names, types, a number, addresses, or the like, of POIs contained in the geographic location region. The POI information may largely reflect the geographic function of the geographic location region. For example, geographic location regions where Disney and a fairground are located have similar geographic functions.

The user information may include an age distribution, a sex ratio, an occupation type distribution, an education level status, a salary status, or the like, of the users in the geographic location region. For example, users in a geographic location region, such as a science and technology park, show characteristics that the users are mostly male, 25-35 years old, programmers, and have college degrees or above and higher salaries.

The place query terms initiated in the geographic location region largely reflect user preferences of the geographic location region, and also reflect the geographic function of the geographic location region to a certain extent. The data may also be acquired from the retrieval log, and the place query terms initiated in the geographic location region in the retrieval log are counted to acquire the place query term with an occurrence frequency or an occurrence number meeting a certain condition.

The surface-feature distribution information may include at least one of: a map image or a real-scene image of the geographic location region. These images may be acquired from a server or database of a map-type application.

The map image of the geographic location region may be an image of the geographic location region displayed on a map. The map image may be a satellite image or a base map image. The map image includes map elements for various region types, such as land, river systems, green space, or the like, roads, such as high speed roads, city main roads, railways, or the like, and various types of POIs, such as scenic spots, hotels, schools, shopping malls, shops, office buildings, stadiums, or the like. The map image well reflects the surface-feature distribution of the geographic location region.

The real-scene image refers to an image drawn or shot based on a real scene, such as a street scene image. The real-scene image also well reflects the surface-feature distribution of the geographic location region.

In order to facilitate the description and understanding of the following embodiments, in the subsequent embodiments, for example, five features of the POI information, the user information, the place query term initiated in the geographic location region, the map image and the real-scene image are extracted from the geographic location region (each sample), and the five features are represented as: $X_1$, $X_2$, $X_3$, $X_4$ and $X_5$ respectively.

The five features $X_1$, $X_2$, $X_3$, $X_4$ and $X_5$ extracted from the geographic location region are input into the encoding model, the encoding model performs embedding on the five features to obtain vector representations of the features, i.e., the vector representation $\vec{v}_1$ of the POI information, the vector representation $\vec{v}_2$ of the user information, the vector representation $\vec{v}_3$ of the place query term initiated in the geographic location region, the vector representation $\vec{v}_4$ of the map image and the vector representation $\vec{v}_5$ of the real-scene image. Then, the vector representations obtained by the embedding are fused to obtain an encoding result v of the geographic location region.

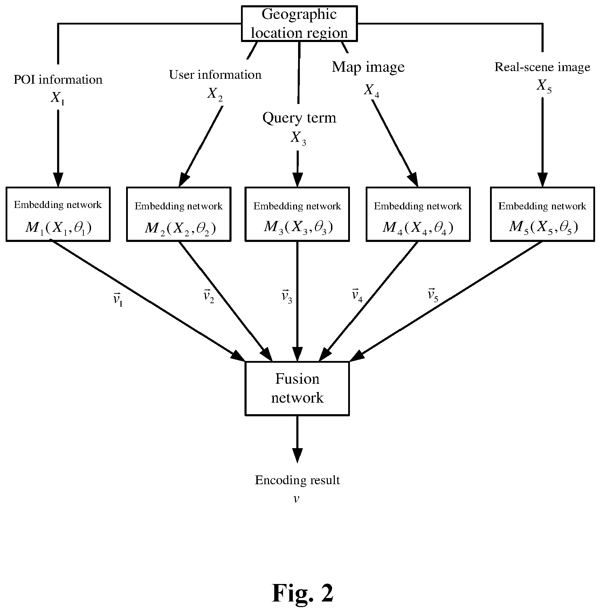

Fig. 2 is a schematic structural diagram of the encoding model according to an embodiment of the present disclosure, and as shown in Fig. 2, at least two embedding networks may be included in the encoding model, and a number of the embedding networks is consistent with a number of the features extracted from the geographic location region. Taking the above-mentioned five features $X_1$, $X_2$, $X_3$, $X_4$ and $X_5$ as an example, the encoding model includes 5 embedding networks which are represented as $M_1$, $M_2$, $M_3$, $M_4$ and $M_5$ respectively.

Since the POI information and the query term input into the embedding networks $M_1$ and $M_3$ are usually text-type data, these embedding networks may be neural networks, such as RNNs, or the like. The embedding operations performed by the embedding networks $M_1$ and $M_3$ may be represented as $M_1(X_1, \theta_1)$ and $M_3(X_3, \theta_3)$ respectively, wherein $\theta_1$ and $\theta_3$ are model parameters of the embedding networks $M_1$ and $M_3$ respectively.

Since the user information input into the embedding network $M_2$ is usually attribute-distribution-type data, this embedding network may be a neural network, such as a DNN, or the like. The embedding operation performed by the embedding network $M_2$ may be represented as $M_2(X_2, \theta_2)$, where $\theta_2$ is a model parameter of the embedding network $M_2$.

Since image-type data is input into the embedding networks $M_4$ and $M_5$, these embedding networks may be neural networks, such as CNNs, or the like. The embedding operations performed by the embedding networks $M_4$ and $M_5$ may be represented as $M_4(X_4, \theta_4)$ and $M_5(X_5, \theta_5)$ respectively, wherein $\theta_4$ and $\theta_5$ are model parameters of the embedding networks $M_4$ and $M_5$ respectively.

The vector representations output by the embedding networks are sent into a fusion network for fusion, so as to obtain the encoding result v of the geographic location region. The fusion may be a process of splicing the vector representations, and then obtaining the encoding result through fully connected mapping. Or, the fusion may also be a process of taking an outer product of the vector representations to obtain the encoding result. Other processing methods are also possible, which are not listed here. A model parameter of the fusion network is represented as $\theta$.

During training, for a triplet $(v_a, v_+, v_-)$, $v_a$ is the anchor sample, $v_+$ is the positive sample, and $v_-$ is the negative sample. The encoding model has the training targets of minimizing the distance between the encoding result of the anchor sample and the encoding result of the positive sample in the triplet, and maximizing the distance between the encoding result of the anchor sample and the encoding result of the negative sample in the triplet.

Assuming that the processing of each sample by the encoding model is represented as $f()$, a loss function may be defined as, for example:

$$\text{Loss} = \sum_E \max[0, r + \left\| f(v_a) - f(v_+) \right\|_2^2 - \left\| f(v_a) - f(v_-) \right\|_2^2]$$

wherein r is a preset minimum interval, so as to ensure that one minimum interval r exists between the distance between the encoding result of the anchor sample and the encoding result of the positive sample and the distance between the encoding result of the anchor sample and the encoding result of the negative sample. $\left\| \ \right\|_2^2$ represents the Euclidean distance.

In the training process, the model parameters of the encoding model, i.e., the above-mentioned $\theta_1$, $\theta_2$, $\theta_3$, $\theta_4$, $\theta_5$ and $\theta$ are updated using the value of the loss function during each iteration until training ending conditions, such as convergence of the value of the loss function, reaching of a preset number of iterations, or the like, are met.

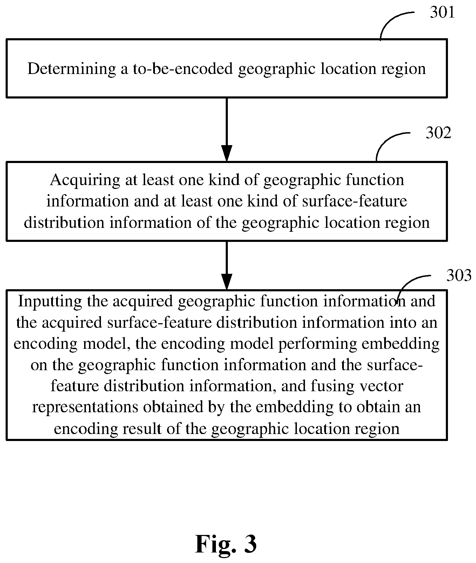

At this point, the encoding model is obtained based on training and may be configured to encode the geographic location region. Fig. 3 is a flow chart of a method for encoding a geographic location region according to an embodiment of the present disclosure, an execution subject of the method may be an apparatus for encoding a geographic location region, and the apparatus may be configured as an application located at a server, or a functional unit, such as a plug-in or SDK located in the application of the server, or the like, or be located at a computer terminal with high computing power, which is not particularly limited in the embodiment of the present application. As shown in Fig. 3, the method may include the following steps:

301: determining a to-be-encoded geographic location region.

302: acquiring at least one kind of geographic function information and at least one kind of surface-feature distribution information of the geographic location region.

303: inputting the acquired geographic function information and the acquired surface-feature distribution information into an encoding model, the encoding model performing embedding on the geographic function information and the surface-feature distribution information, and fusing vector representations obtained by the embedding to obtain an encoding result of the geographic location region.

The above steps will be described below in detail in conjunction with an embodiment.

First, the step 301 of determining a to-be-encoded geographic location region will be described in detail.

Geographic location regions pre-divided according to preset precision may be used as the to-be-encoded geographic location regions, and the encoding results are determined one by one. Or, one of the geographic location regions may be used as the to-be-encoded geographic location region to determine the encoding result.

In an actual usage scenario, there may exist the following situation. A geographic location coordinate of a user is acquired, the geographic location coordinate is used as input, and a geographic location region where the geographic location coordinate is located is determined as the to-be-encoded geographic location region.

In such a usage scenario, the encoding model may be used in real time to determine the encoding result of the geographic location region where the input geographic location coordinate is located. Or, the encoding results of the geographic location regions may be acquired in advance to be stored, and after the input geographic location coordinate is acquired, the encoding result of the geographic location region where the geographic location coordinate is located is determined by querying the stored encoding results of the geographic location regions.

For the step 302 of acquiring at least one kind of geographic function information and at least one kind of surface-feature distribution information of the geographic location region, reference may be made to the description in step 102 in the embodiment shown in Fig. 1, which is not repeated herein. In addition, the features extracted in this step are the same as the features used in the process of training the encoding model.

After the encoding model shown in Fig. 2 is obtained by training, in the step 303, the extracted geographic function information and surface-feature distribution information, and other features are input into the embedding networks respectively. Each feature is encoded by each embedding network to obtain each vector representation, and then, the vector representations are fused by the fusion network to obtain the encoding result of the to-be-encoded geographic location region. That is, various types of features are subjected to multimode information encoding to be mapped to a unified encoding result. For example, the features are mapped to a digital encoding result.

For the specific processing operations of each embedding network and the fusion network, reference may be made to the related description of the embodiment shown in Fig. 1, which is not repeated herein.

With the encoding method, the geographic location regions with similar geographic functions and surface-feature distributions have more similar encoding results.

The geographic location region encoded using the method in the above embodiment may be applied to various application scenarios. Just a few application scenarios are listed below:

a first application scenario: similar geographic location regions are determined using a distance between the encoding results of the geographic location regions.

For example, in a map-type application, all overpasses are required to be found, so as to perform an information check. Then, after a plot of the overpass is found, all other plots meeting a requirement of similarity to the encoding result of the plot may be found using similarity of encoding results. The found plots should also be the plots where the overpass is located in theory, and these plots are screened and verified; for example, if a shop-type POI appears on an overpass, the plot is obviously wrong.

For another example, a site of a fast food chain store is required to be selected, plots where branch stores with good business conditions are located may be determined, and then, plots meeting a certain requirement of similarity to these plots are found using similarity of encoding results, and the site is selected from these plots to set up a new branch store of the fast food chain store. Due to the similarity of the geographic functions and surface-feature distributions, the new branch store of the fast food chain store set up on the newly selected plot may also have a good business condition.

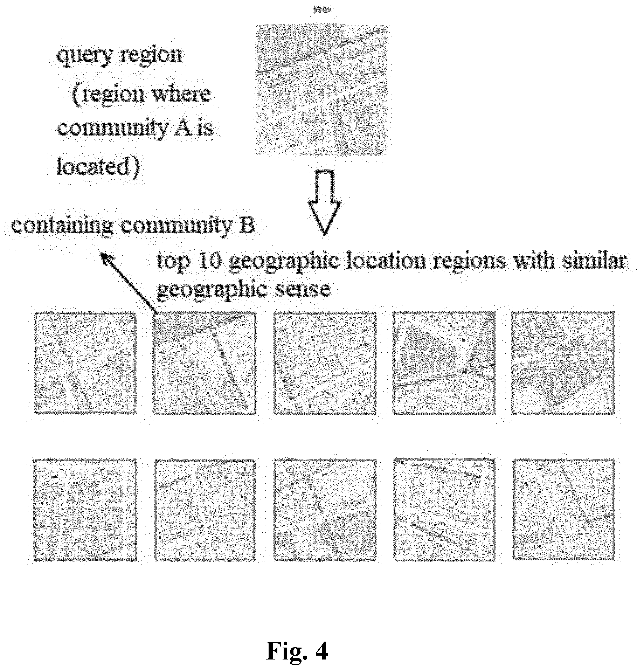

For another example, when a user needs to determine a region with a specific geographic feature, the user may first select a region with the feature and take the region as a query region. An encoding result of the query region and encoding results of other geographic location regions are subjected to similarity calculation, so as to screen top N geographic location regions, wherein N is a preset positive integer. These screened geographic location regions also have the specific geographic feature. For example, a user wants to find a region with a residential region and a river, or a region where a residential region is close to a river. As shown in Fig. 4, the user first finds a community A close to a river, and wants to find other communities similar to the community A. The geographic location region in which the community A is located may be taken as a query region. An encoding result of the query region and encoding results of other geographic location regions are subjected to similarity calculation, and are subjected to geographic-sense similarity calculation actually, top 10 geographic location regions are screened, and a community contained in the 10 geographic location regions may be regarded as the community close to the river; for example, a community B is screened. With a similar method, the user may also find a villa region close to a river, a work region close to a road and a river, a cross-river tunnel, a community group close to a school, or the like.

A second application scenario: search recommendation is performed on a user based on the encoding result of the geographic location region where the user is located.

For example, when the user initiates a search, the geographic location region where the user is located during the search is acquired, and the encoding result of the geographic location region is used as one of input features to perform search recommendation. For example, when "ba" is input in an input box, a search term is recommended to the user in a form, such as a drop-down box, with the input of the user. If the user is located in a hotel in Beijing, scenic spots, such as "Badaling Great Wall", or the like, may be recommended to the user preferably. If the user is located in the science and technology park, office buildings of technology companies, such as "Baidu Building", or the like, may be recommended to the user preferably.

A third application scenario: a search result sort is performed on a user based on the encoding result of the geographic location region where the user is located.

For example, when the user initiates a search, the geographic location region where the user is located during the search is acquired, and the encoding result of the geographic location region is used as one of input features to perform the search result sort. With the search result sorting method, the recommendation may be based on the geographic functions and surface-feature distributions of the geographic location regions. For example, for a restaurant search initiated in a software park in Beijing and a software park in Chengdu, although the two parts are far apart in terms of a geographic location, encoding results thereof are highly similar due to the similarity of the geographic functions and surface-feature distributions. Restaurant search results based on this also have certain similarity; for example, fast food is preferred.

For another example, a software park in Beijing is close to a finance street, but encoding results thereof are quite different. Therefore, the sort of the restaurant search results is also quite different. For example, users of the software park prefer fast food restaurants, and users of the finance street prefer western food restaurants.

The method according to the present disclosure is described above in detail, and an apparatus according to the present disclosure will be described below in detail in conjunction with an embodiment.

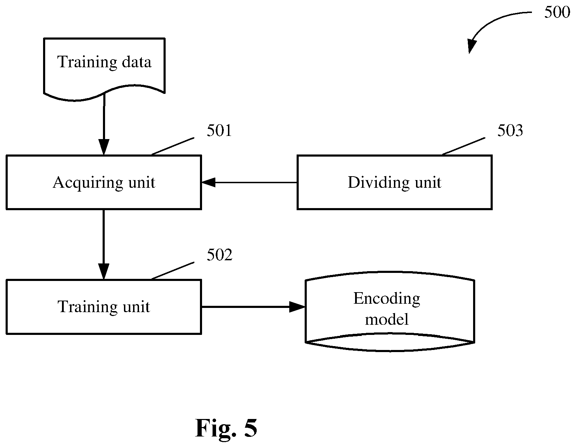

Fig. 5 is a structural diagram of an apparatus for establishing an encoding model according to an embodiment of the present disclosure, and as shown in Fig. 5, the apparatus 500 may include an acquiring unit 501 and a training unit 502, and may further include a dividing unit 503. The main functions of each constitutional unit are as follows.

The acquiring unit 501 is configured to acquire training data, the training data including at least one triplet, and the triplet including an anchor sample, a positive sample and a negative sample of geographic location regions.

The training unit 502 is configured to train the encoding model using the training data, the encoding model performing the following operations on each sample: performing embedding on at least one kind of geographic function information and at least one kind of surface-feature distribution information of the sample, and fusing vector representations obtained by the embedding to obtain an encoding result of the sample.

The encoding model has training targets of minimizing a distance between the encoding result of the anchor sample and the encoding result of the positive sample in the triplet, and maximizing a distance between the encoding result of the anchor sample and the encoding result of the negative sample in the triplet.

The geographic function information may include at least one of: point of interest information, user information, or place query terms initiated at the geographic location region.

The surface-feature distribution information may include at least one of: a map image or a real-scene image.

Specifically, the acquiring unit 501 may acquire the training data using but not limited to the following methods: a first method: acquiring the anchor sample of a geographic location region selecting a neighbor geographic location region of the anchor sample as the positive sample, and selecting a non-neighbor geographic location region of the anchor sample as the negative sample.

A second method: from a navigation log, acquiring a geographic location region where a navigation starting point is located and a geographic location region where a navigation ending point is located as the anchor sample and the positive sample of the geographic location regions respectively, and selecting another geographic location region as the negative sample.

A third method: from a retrieval log, acquiring a geographic location region where an initiating location of retrieval is located and a geographic location region where a target location of the retrieval is located as the anchor sample and the positive sample of the geographic location regions respectively, and selecting another geographic location region as the negative sample.

The dividing unit 503 is configured to pre-divide the geographic location region according to preset precision.

As an implementable way, the encoding model may include at least two embedding networks and a fusion network.

The training unit 502 may input the at least one kind of geographic function information and the at least one kind of surface-feature distribution information extracted from the sample into the embedding networks respectively.

The embedding network is configured to perform embedding on the input information to obtain the corresponding vector representations.

The fusion network is configured to fuse the vector representations output by the embedding networks, so as to obtain the encoding result of the sample.

When training the encoding model, the training unit 502 iteratively updates model parameters of the embedding network and the fusion network according to values of a loss function, and the loss function is pre-constructed according to the training target.

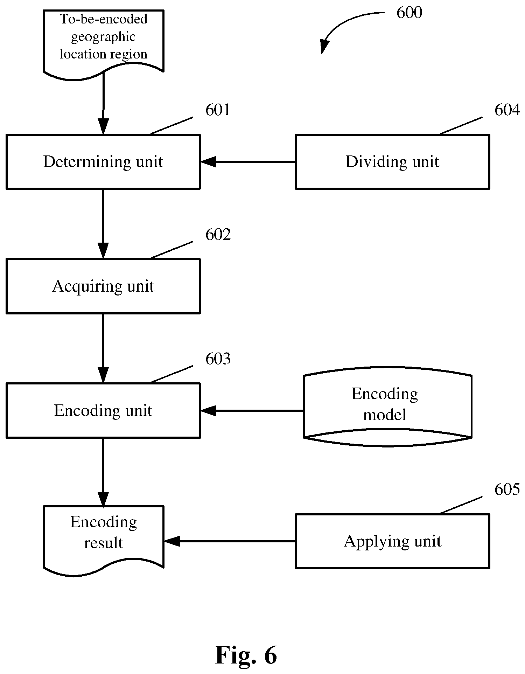

Fig. 6 is a structural diagram of an apparatus for encoding a geographic location region according to an embodiment of the present disclosure, and as shown in Fig. 6, the apparatus 600 may include a determining unit 601, an acquiring unit 602 and an encoding unit 603, and may further include a dividing unit 604 and an applying unit 605.

The determining unit 601 is configured to determine a to-be-encoded geographic location region.

The acquiring unit 602 is configured to acquire at least one kind of geographic function information and at least one kind of surface-feature distribution information of the geographic location region.

The encoding unit 603 is configured to input the acquired geographic function information and the acquired surface-feature distribution information into an encoding model, the encoding model performing embedding on the geographic function information and the surface-feature distribution information, and fusing vector representations obtained by the embedding to obtain an encoding result of the geographic location region.

The geographic function information includes at least one of: point of interest information, user information, or place query terms initiated at the geographic location region.

The surface-feature distribution information includes at least one of: a base map image or a street scene image.

The dividing unit 604 is configured to pre-divide the geographic location region according to preset precision.

As an implementable way, the determining unit 601 acquires an input geographic location coordinate; and determines the geographic location region where the geographic location coordinate is located as the to-be-encoded geographic location region.

As another implementable way, the determining unit 601 may use each divided geographic location region as the to-be-encoded geographic location region.

The applying unit 605 is configured to determine similar geographic location regions using a distance between the encoding results of the geographic location regions; or, based on the encoding result of the geographical location region where a user is located, perform search recommendation or a search result sort on the user.

The embodiments in the specification are described progressively, and mutual reference may be made to same and similar parts among the embodiments, and each embodiment focuses on differences from other embodiments. In particular, since the apparatus embodiment is substantially similar to the method embodiment, the description is relatively simple, and reference may be made to the corresponding description of the method embodiment for relevant points.

According to the embodiment of the present disclosure, there are also provided an electronic device, a readable storage medium and a computer program product.

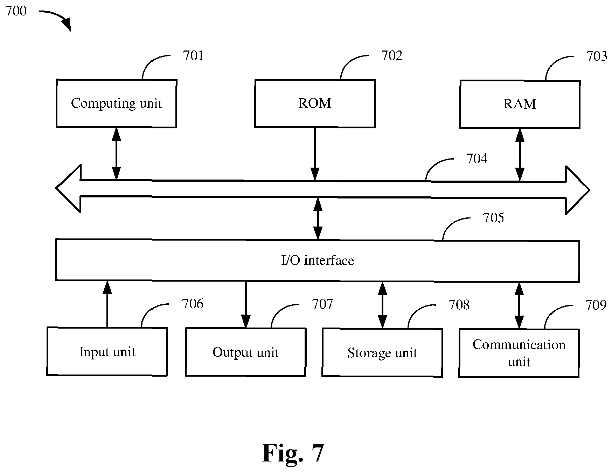

Fig. 7 is a block diagram of an electronic device configured to implement the method for encoding a geographic location region and the method for establishing an encoding model according to the embodiments of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 7, the device 700 includes a computing unit 701 which may perform various appropriate actions and processing operations according to a computer program stored in a read only memory (ROM) 702 or a computer program loaded from a storage unit 708 into a random access memory (RAM) 703. Various programs and data necessary for the operation of the device 700 may be also stored in the RAM 703. The computing unit 701, the ROM 702, and the RAM 703 are connected with one other through a bus 704. An input/output (I/O) interface 705 is also connected to the bus 704.

The plural components in the device 700 are connected to the I/O interface 705, and include: an input unit 706, such as a keyboard, a mouse, or the like; an output unit 707, such as various types of displays, speakers, or the like; the storage unit 708, such as a magnetic disk, an optical disk, or the like; and a communication unit 709, such as a network card, a modem, a wireless communication transceiver, or the like. The communication unit 709 allows the device 700 to exchange information/data with other devices through a computer network, such as the Internet, and/or various telecommunication networks.

The computing unit 701 may be a variety of general and/or special purpose processing components with processing and computing capabilities. Some examples of the computing unit 701 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 701 performs the methods and processing operations described above, such as the method for encoding a geographic location region and the method for establishing an encoding model. For example, in some embodiments, the method for encoding a geographic location region and the method for establishing an encoding model may be implemented as a computer software program tangibly contained in a machine readable medium, such as the storage unit 708.

In some embodiments, part or all of the computer program may be loaded and/or installed into the device 700 via the ROM 502 and/or the communication unit 709. When the computer program is loaded into the RAM 703 and executed by the computing unit 701, one or more steps of the method for encoding a geographic location region and the method for establishing an encoding model described above may be performed. Alternatively, in other embodiments, the computing unit 701 may be configured to perform the method for encoding a geographic location region and the method for establishing an encoding model by any other suitable means (for example, by means of firmware).

Various implementations of the systems and technologies described herein may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service. The server may also be a server of a distributed system, or a server incorporating a blockchain.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

**Claims**

1.  A method for establishing an encoding model, comprising:

    acquiring training data, the training data comprising at least one triplet, and the triplet comprising an anchor sample, a positive sample and a negative sample of geographic location regions; and
    training the encoding model using the training data, the encoding model performing the following operations on each sample: performing embedding on at least one kind of geographic function information and at least one kind of surface-feature distribution information of the sample, and fusing vector representations obtained by the embedding to obtain an encoding result of the sample;
    wherein the encoding model has training targets of minimizing a distance between the encoding result of the anchor sample and the encoding result of the positive sample in the triplet, and maximizing a distance between the encoding result of the anchor sample and the encoding result of the negative sample in the triplet.

2.  The method according to claim 1, wherein the geographic function information comprises at least one of: point of interest information, user information, or place query terms initiated at the geographic location region; and
    the surface-feature distribution information comprises at least one of: a map image or a real-scene image.

3.  The method according to claim 1, wherein the acquiring training data comprises:

    acquiring the anchor sample of a geographic location region, selecting a neighbor geographic location region of the anchor sample as the positive sample, and selecting a non-neighbor geographic location region of the anchor sample as the negative sample; or
    from a navigation log, acquiring a geographic location region where a navigation starting point is located and a geographic location region where a navigation ending point is located as the anchor sample and the positive sample of the geographic location regions respectively, and selecting another geographic location region as the negative sample; or
    from a retrieval log, acquiring a geographic location region where an initiating location of retrieval is located and a geographic location region where a target location of the retrieval is located as the anchor sample and the positive sample of the geographic location regions respectively, and selecting another geographic location region as the negative sample.

4.  The method according to any one of claims 1 to 3, further comprising: pre-dividing the geographic location region according to preset precision.

5.  The method according to any one of claims 1 to 3, wherein the encoding model comprises at least two embedding networks and a fusion network;

    wherein the at least one kind of geographic function information and the at least one kind of surface-feature distribution information extracted from the sample are input into the embedding networks respectively;
    the embedding is performed by the embedding network on the input information to obtain the corresponding vector representations; and
    the vector representations output by the embedding networks are fused by the fusion network, so as to obtain the encoding result of the sample;
    when the encoding model is trained, model parameters of the embedding network and the fusion network are iteratively updated according to values of a loss function, and the loss function is pre-constructed according to the training target.

6.  A method for encoding a geographic location region, comprising:

determining a to-be-encoded geographic location region;
acquiring at least one kind of geographic function information and at least one kind of surface-feature distribution information of the geographic location region; and
inputting the acquired geographic function information and the acquired surface-feature distribution information into an encoding model, the encoding model performing embedding on the geographic function information and the surface-feature distribution information, and fusing vector representations obtained by the embedding to obtain an encoding result of the geographic location region.

7. The method according to claim 6, wherein the geographic function information comprises at least one of: point of interest information, user information, or place query terms initiated at the geographic location region; and
the surface-feature distribution information comprises at least one of: a base map image or a street scene image.

8. The method according to claim 6, further comprising: pre-dividing the geographic location region according to preset precision;
wherein the determining the to-be-encoded geographic location region comprises: acquiring an input geographic location coordinate; and determining the geographic location region where the geographic location coordinate is located as the to-be-encoded geographic location region.

9. The method according to any one of claim s 6 to 8, further comprising:

   determining similar geographic location regions using a distance between the encoding results of the geographic location regions; or,
   based on the encoding result of the geographical location region where a user is located, performing search recommendation or a search result sort on the user.

10. An apparatus for establishing an encoding model, comprising:

   an acquiring unit configured to acquire training data, the training data comprising at least one triplet, and the triplet comprising an anchor sample, a positive sample and a negative sample of geographic location regions; and
   a training unit configured to train the encoding model using the training data, the encoding model performing the following operations on each sample: performing embedding on at least one kind of geographic function information and at least one kind of surface-feature distribution information of the sample, and fusing vector representations obtained by the embedding to obtain an encoding result of the sample;
   wherein the encoding model has training targets of minimizing a distance between the encoding result of the anchor sample and the encoding result of the positive sample in the triplet, and maximizing a distance between the encoding result of the anchor sample and the encoding result of the negative sample in the triplet.

11. The apparatus according to claim 10, wherein the geographic function information comprises at least one of: point of interest information, user information, or place query terms initiated at the geographic location region; and
the surface-feature distribution information comprises at least one of: a map image or a real-scene image.

12. The apparatus according to claim 10, wherein the acquiring unit is specifically configured to:

   acquire the anchor sample of a geographic location region, select a neighbor geographic location region of the anchor sample as the positive sample, and select a non-neighbor geographic location region of the anchor sample as the negative sample; or
   from a navigation log, acquire a geographic location region where a navigation starting point is located and a geographic location region where a navigation ending point is located as the anchor sample and the positive sample of the geographic location regions respectively, and select another geographic location region as the negative sample; or
   from a retrieval log, acquire a geographic location region where an initiating location of retrieval is located and a geographic location region where a target location of the retrieval is located as the anchor sample and the positive sample of the geographic location regions respectively, and select another geographic location region as the negative sample.

13. The apparatus according to any one of claims 10 to 12, further comprising:
a dividing unit configured to pre-divide the geographic location region according to preset precision.

**14.** The apparatus according to any one of claims 10 to 12, wherein the encoding model comprises at least two embedding networks and a fusion network;

wherein the training unit is specifically configured to input the at least one kind of geographic function information and the at least one kind of surface-feature distribution information extracted from the sample into the embedding networks respectively;
the embedding network is configured to perform embedding on the input information to obtain the corresponding vector representations;
the fusion network is configured to fuse the vector representations output by the embedding networks, so as to obtain the encoding result of the sample;
when training the encoding model, the training unit iteratively updates model parameters of the embedding network and the fusion network according to values of a loss function, and the loss function is pre-constructed according to the training target.

**15.** An apparatus for encoding a geographic location region, comprising:

a determining unit configured to determine a to-be-encoded geographic location region;
an acquiring unit configured to acquire at least one kind of geographic function information and at least one kind of surface-feature distribution information of the geographic location region; and
an encoding unit configured to input the acquired geographic function information and the acquired surface-feature distribution information into an encoding model, the encoding model performing embedding on the geographic function information and the surface-feature distribution information, and fusing vector representations obtained by the embedding to obtain an encoding result of the geographic location region.

**16.** The apparatus according to claim 15, wherein the geographic function information comprises at least one of: point of interest information, user information, or place query terms initiated at the geographic location region; and
the surface-feature distribution information comprises at least one of: a base map image or a street scene image.

**17.** The apparatus according to claim 15, further comprising:

a dividing unit configured to pre-divide the geographic location region according to preset precision;
wherein the determining unit is specifically configured to: acquire an input geographic location coordinate; and determine the geographic location region where the geographic location coordinate is located as the to-be-encoded geographic location region.

**18.** The apparatus according to any one of claims 15 to 17, further comprising:
an applying unit configured to determine similar geographic location regions using a distance between the encoding results of the geographic location regions; or, based on the encoding result of the geographical location region where a user is located, perform search recommendation or a search result sort on the user.

**19.** An electronic device, comprising:

at least one processor; and
a memory connected with the at least one processor communicatively;
wherein the memory stores instructions executable by the at least one processor to enable the at least one processor to perform the method according to any one of claims 1 to 9.

**20.** A non-transitory computer readable storage medium with computer instructions stored thereon, wherein the computer instructions are used for causing a computer to perform the method according to any one of claims 1 to 9.

**21.** A computer program product comprising a computer program which, when executed by a processor, implements the method according to any one of claims 1 to 9.

Acquiring training data, the training data including more than one triplet, and the triplet including an anchor sample, a positive sample and a negative sample of geographic location regions

101

Training the encoding model using the training data, the encoding model performing the following operations on each sample: performing embedding on at least one kind of geographic function information and at least one kind of surface-feature distribution information of the sample, and fusing vector representations obtained by the embedding to obtain an encoding result of the sample; wherein the encoding model has training targets of minimizing a distance between the encoding result of the anchor sample and the encoding result of the positive sample in the triplet, and maximizing a distance between the encoding result of the anchor sample and the encoding result of the negative sample in the triplet

102

# Fig. 1

Geographic
location region

POI information
$X_1$

User information
$X_2$

Map image
$X_4$

Real-scene image
$X_5$

Query term
$X_3$

Embedding network
$M_1(X_1, \theta_1)$

Embedding network
$M_2(X_2, \theta_2)$

Embedding network
$M_3(X_3, \theta_3)$

Embedding network
$M_4(X_4, \theta_4)$

Embedding network
$M_5(X_5, \theta_5)$

$\vec{v}_1$

$\vec{v}_2$

$\vec{v}_3$

$\vec{v}_4$

$\vec{v}_5$

Fusion
network

Encoding result
$v$

**Fig. 2**

---

┌─────────────────────────────────────────────────┐  ⌐ 301
│                                                 │
│  Determining a to-be-encoded geographic location region  │
│                                                 │
└─────────────────────────────────────────────────┘
                         │
                         ▼
┌─────────────────────────────────────────────────┐  ⌐ 302
│                                                 │
│  Acquiring at least one kind of geographic function  │
│  information and at least one kind of surface-feature  │
│  distribution information of the geographic location region  │
│                                                 │
└─────────────────────────────────────────────────┘
                         │
                         ▼
┌─────────────────────────────────────────────────┐  ⌐ 303
│  Inputting the acquired geographic function information and  │
│  the acquired surface-feature distribution information into an  │
│  encoding model, the encoding model performing embedding  │
│  on the geographic function information and the surface-  │
│  feature distribution information, and fusing vector  │
│  representations obtained by the embedding to obtain an  │
│  encoding result of the geographic location region  │
└─────────────────────────────────────────────────┘

**Fig. 3**

query region
(region where
community A is
located)

containing community B

top 10 geographic location regions with similar
geographic sense

**Fig. 4**

500

Training data

501

Acquiring unit ← Dividing unit 503

502

Training unit → Encoding model

**Fig. 5**

600

To-be-encoded
geographic
location region

601 Determining unit

604 Dividing unit

602 Acquiring unit

603 Encoding unit

Encoding
model

Encoding
result

605 Applying unit

**Fig. 6**

700

701 — Computing unit

702 — ROM

703 — RAM

704

705 — I/O interface

706 — Input unit

707 — Output unit

708 — Storage unit

709 — Communication unit

**Fig. 7**

# INTERNATIONAL SEARCH REPORT

| International application No. |
| --- |
| **PCT/CN2021/131177** |

| | |
| --- | --- |
| **A.** | **CLASSIFICATION OF SUBJECT MATTER** |

G06F 30/27(2020.01)i; G06F 16/29(2019.01)i; G06F 16/587(2019.01)i; G06F 16/9537(2019.01)i; G06F 16/909(2019.01)i

According to International Patent Classification (IPC) or to both national classification and IPC

| | |
| --- | --- |
| **B.** | **FIELDS SEARCHED** |

Minimum documentation searched (classification system followed by classification symbols)

G06F30/-:; G06F16/-

Documentation searched other than minimum documentation to the extent that such documents are included in the fields searched

Electronic data base consulted during the international search (name of data base and, where practicable, search terms used)

CNTXT; ENTXTC; CNKI: 地理, 位置, 编码, 训练, 样本, 三元组, 最大化, 最小化, 距离, 融合, 整合, 功能, 兴趣点, 用户信息, 当前位置, 地物分布, 图像, 图片, GEOGRAPH+, LOCATION+, POSITION+, ENCOD+, TRAIN+, SAMPL+, TRIPLE, TRIAD, MAX+, MIN+, DISTANCE, MERG+, MIX+, INTERGRAT+, FUNCTION+, POI, USER+ INFORMATION +, CURRENT POSITION+, GROUND FRATURE+, IMAGE, PICTURE

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 113342912 A (BEIJING BAIDU NETCOM SCIENCE AND TECHNOLOGY CO., LTD.) 03 September 2021 (2021-09-03) claims 1-21 | 1-21 |
| X | CN 110727816 A (BAIDU ONLINE NETWORK TECHNOLOGY (BEIJING) CO., LTD.) 24 January 2020 (2020-01-24) description, paragraphs 34-94 | 6-9, 15-21 |
| Y | CN 110727816 A (BAIDU ONLINE NETWORK TECHNOLOGY (BEIJING) CO., LTD.) 24 January 2020 (2020-01-24) description, paragraphs 34-94 | 1-5, 10-14 |
| Y | CN 110866140 A (TENCENT TECHNOLOGY SHENZHEN CO., LTD.) 06 March 2020 (2020-03-06) description, paragraphs 48-191 | 1-5, 10-14 |
| A | CN 111666462 A (BAIDU ONLINE NETWORK TECHNOLOGY (BEIJING) CO., LTD.) 15 September 2020 (2020-09-15) entire document | 1-21 |

☑ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 December 2021** | **09 March 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 174 712 A1

## INTERNATIONAL SEARCH REPORT

International application No.

**PCT/CN2021/131177**

### C. DOCUMENTS CONSIDERED TO BE RELEVANT

| Category* | Citation of document, with indication, where appropriate, of the relevant passages | Relevant to claim No. |
|---|---|---|
| A | US 2020257940 A1 (CANON KABUSHIKI KAISHA) 13 August 2020 (2020-08-13) entire document | 1-21 |

Form PCT/ISA/210 (second sheet) (January 2015)

22

**INTERNATIONAL SEARCH REPORT**
Information on patent family members

International application No.

**PCT/CN2021/131177**

| Patent document cited in search report | | | Publication date (day/month/year) | Patent family member(s) | | | Publication date (day/month/year) |
|---|---|---|---|---|---|---|---|
| CN | 113342912 | A | 03 September 2021 | None | | | |
| CN | 110727816 | A | 24 January 2020 | None | | | |
| CN | 110866140 | A | 06 March 2020 | None | | | |
| CN | 111666462 | A | 15 September 2020 | CN | 111666462 | B | 21 September 2021 |
| US | 2020257940 | A1 | 13 August 2020 | AU | 2019200976 | A1 | 27 August 2020 |

Form PCT/ISA/210 (patent family annex) (January 2015)

**EP 4 174 712 A1**

**Patent documents cited in the description**

- CN 202110565434